# DEMANDE DE BREVET EUROPEEN

(11) **EP 4 825 570 A2**
(43) Date de publication de la demande: **21.10.2026**
(21) Numéro de dépôt: 25220192.6
(22) Date de dépôt: 02.12.2025
(51) Int. Cl.: B29D 30/42, B29D 30/30

(54) **PROCÉDÉ DE DÉPOSE D'UN PRODUIT PROFILÉ SUR UN SUPPORT PAR EXEMPLE CYLINDRIQUE**

(30) Priorité: 05.12.2024 FR 2413481
(71) Demandeur: COMPAGNIE GENERALE DES ETABLISSEMENTS MICHELIN, 63000 Clermont-Ferrand (FR)
(72) Inventeur: SOUSSI, Reda, 63040 CLERMONT-FERRAND Cedex 09 (FR); PONCHON, François, 63040 CLERMONT-FERRAND Cedex 09 (FR); MONIN BAROILLE, Emilien, 63040 CLERMONT-FERRAND Cedex 09 (FR); DABARD, Laurent, 63040 CLERMONT-FERRAND Cedex 09 (FR)
(74) Mandataire: M.F.P. Michelin

(57) **Abrégé**

L'invention concerne un procédé de dépose d'un produit profilé sur un support, le produit profilé étant réalisé dans un mélange élastomère et découpé à une longueur prédéfinie avant d'être déposé sur ledit support, les deux extrémités du produit profilé se rejoignant l'une avec l'autre lorsque le produit profilé est déposé sur ledit support, le procédé de dépose comprenant une étape d'application de marques sur les deux extrémités du produit profilé, cette étape de marquage étant réalisée avant la dépose du produit profilé sur le support, et le procédé de dépose comprenant une étape d'acquisition d'au moins une image de la jonction des deux extrémités du produit profilé et des marques apposées sur ces deux extrémités, cette étape d'acquisition étant réalisée après la dépose du produit profilé sur le support, le procédé de dépose étant caractérisé en ce que les marques apposées sur les extrémités du produit profilé sont apposées par ablation ou modification de matière avec un faisceau laser.

## Description

La présente invention est relative à l'apposition de marques sur un produit profilé réalisé dans un mélange élastomère en vue de l'utilisation du produit profilé ainsi marqué pour la confection d'un produit semi-fini tel une ébauche de pneumatique.

Lors de la confection d'une ébauche de pneumatique, différents produits profilés réalisés dans différents mélanges élastomères sont utilisés. Afin d'obtenir un pneumatique de bonne qualité et uniforme, il est nécessaire que les produits profilés soient positionnés le plus précisément possible les uns par rapport aux autres, ainsi que par rapport à différents axes ou plans de référence. De plus, il peut aussi être nécessaire que les extrémités des produits profilés se rejoignent le plus précisément possible.

Le document EP3390031 décrit un procédé d'enroulement d'une bande de gomme sur une forme de révolution, dans lequel on découpe une bande de longueur prédéterminée, on y appose des marques de front avant et de front arrière, on l'entraîne vers la forme de révolution, on dispose le front avant sur la forme, et on entraîne la forme en rotation pour enrouler la bande sur la forme.

Dans le procédé décrit dans ce document EP3390031, les marques de front avant et de front arrière sont utilisées pour piloter le déplacement de la bande et la rotation de la forme de révolution de façon à compenser les variations de longueur de la bande et obtenir une jonction de bonne qualité de ses extrémités.

Dans ce document EP3390031, les marques de front avant et de front arrière sont apposées mécaniquement par des rouleaux de marquage. Ces rouleaux de marquage permettent de déformer localement la bande de gomme et de laisser des marques en creux visibles à la surface de cette bande.

Premièrement, ces marques apposées mécaniquement n'offrent pas une grande précision de mesure. En effet, les marques devant être assez profondes pour être visibles, ces marques sont aussi plus larges et donc moins précises.

Ensuite, la bande de gomme étant constituée par un matériau sensiblement élastique, ces marques apposées mécaniquement n'offrent pas une grande répétabilité, les marques pouvant s'estomper localement et entraîner des erreurs de mesure et des fausses alertes.

Enfin, les marques divulguées dans ce document EP3390031 permettent d'effectuer des mesures uniquement dans la direction longitudinale de la bande de gomme.

Le document JP4537624 propose une méthode de vérification de la qualité de la jonction entre les deux extrémités d'une bande de gomme déposée sur un tambour de confection et constituant la future bande de roulement d'un pneumatique. Dans cette méthode de vérification, des marques sont apposées en amont et en aval d'une découpe de la bande de gomme et lors de la découpe de cette bande de gomme.

Ce document JP4537624 prévoit que les marques sont apposées mécaniquement, à l'aide de dispositifs de poinçonnage, ou que ces marques sont réalisées avec une encre.

Comme indiqué précédemment, les marques apposées mécaniquement n'offrent pas une grande précision de mesure ni une grande répétabilité.

Ensuite, les marques réalisées avec une encre peuvent faire apparaître des traces aléatoirement sur le pneumatique après cuisson, et ces traces ne sont pas compatibles avec l'apparence souhaitée du pneumatique pour sa commercialisation.

Enfin, les marques divulguées dans ce document JP4537624 permettent d'effectuer des mesures uniquement dans la direction longitudinale de la bande de gomme.

La présente invention a pour objectif de remédier aux inconvénients des méthodes et des procédés de l'art antérieur.

A cet effet, l'invention a pour objet un procédé de dépose d'un produit profilé sur un support, le produit profilé étant réalisé dans un mélange élastomère et découpé à une longueur prédéfinie avant d'être déposé sur ledit support, les deux extrémités du produit profilé se rejoignant l'une avec l'autre lorsque le produit profilé est déposé sur ledit support, le procédé de dépose comprenant une étape d'application de marques sur les deux extrémités du produit profilé, cette étape de marquage étant réalisée avant la dépose du produit profilé sur le support, et le procédé de dépose comprenant une étape d'acquisition d'au moins une image de la jonction des deux extrémités du produit profilé et des marques apposées sur ces deux extrémités, cette étape d'acquisition étant réalisée après la dépose du produit profilé sur le support.

Selon l'invention, le procédé de dépose prévoit que les marques apposées sur les extrémités du produit profilé sont apposées par ablation ou modification de matière avec un faisceau laser, l'interaction du faisceau laser avec la surface supérieure du produit profilé provoquant une modification de couleur ou de structuration, une gravure ou un enlèvement de matière dans la surface supérieure du produit profilé.

En étant réalisées par ablation ou modification de matière avec un faisceau laser, les marques apposées offrent une meilleure précision de mesure et une meilleure répétabilité que des marques apposées mécaniquement. De plus, les marques réalisées par ablation ou modification de matière offrent l'avantage de ne pas laisser de traces visibles par l'œil humain sur le produit, tel un pneumatique, fabriqué avec le produit profilé qui a été marqué conformément à l'invention. En effet, le mélange élastomère du produit profilé étant destiné à être vulcanisé dans un moule de cuisson, ces marques appliquées par ablation ou modification de matière avec un faisceau laser disparaissent lors de la cuisson, notamment en raison de la pression présente dans le moule de cuisson.

Avantageusement mais non obligatoirement, l'invention peut aussi prévoir que :
- les marques apposées sur les deux extrémités d'un produit profilé sont constituées d'au moins un motif qui comprend au moins un trait s'étendant dans la direction longitudinale du produit profilé et au moins un trait s'étendant dans la direction transversale du produit profilé,
- une marque apposée sur une extrémité d'un produit profilé est constituée par une pluralité de motifs comprenant au moins un trait s'étendant dans la direction longitudinale du produit profilé et au moins un trait s'étendant dans la direction transversale du produit profilé, ces différents motifs étant alignés les uns avec les autres dans la direction transversale du produit profilé,
- l'apposition d'une marque sur l'extrémité arrière d'un premier produit profilé est réalisée lorsque cette extrémité arrière est découpée et séparée de l'extrémité avant d'un second produit profilé,
- une alerte est générée lorsque les marques apposées sur les deux extrémités avant et arrière d'un produit profilé déposé sur le support ne se situent pas à la distance souhaitée l'une de l'autre dans la direction longitudinale du produit profilé ou ne sont pas alignées dans la direction transversale du produit profilé,
- le support est cylindrique et prend par exemple la forme d'un tambour de confection d'un pneumatique ou d'une ébauche de pneumatique en cours de confection,
- le produit profilé constitue la bande de roulement d'un futur pneumatique ou un autre composant d'une ébauche de pneumatique tel une nappe, par exemple renforcée.

L'invention a aussi pour objet une installation de dépose d'un produit profilé sur un support, l'installation de dépose comprenant un poste d'alimentation fournissant le profilé continu dans lequel est découpé le produit profilé à déposer, l'installation de dépose comprenant un poste de découpe permettant de prélever une longueur prédéfinie dans le profilé continu qui constituera le produit profilé à déposer sur le support, l'installation de dépose comprenant un premier dispositif de convoyage permettant de réceptionner le profilé continu sortant du poste d'alimentation et de transporter le profilé continu jusqu'au poste de découpe et un deuxième dispositif de convoyage permettant de transporter le produit profilé du poste de découpe jusqu'au support sur lequel le produit profilé doit être déposé, l'installation de dépose comprenant un dispositif de marquage par faisceau laser situé à proximité du poste de découpe ou au-dessus de ce poste de découpe.

Dans cette installation de dépose, le dispositif de marquage par faisceau laser est par exemple monté au-dessus de la lame de découpe du poste de découpe.

D'autres caractéristiques et avantages de l'invention apparaîtront dans la description qui va suivre. Cette description, donnée à titre d'exemple et non limitative, se réfère aux dessins joints en annexe sur lesquels :
- [Fig.1] représente une vue schématique de côté d'une installation de dépose d'un produit profilé selon l'invention,
- [Fig.2] représente une vue schématique de dessus d'une jonction entre deux extrémités d'un produit profilé,
- [Fig.3] représente une vue schématique de côté d'une jonction de bonne qualité entre deux extrémités d'un produit profilé,
- [Fig.4] représente une vue schématique de côté d'une jonction de mauvaise qualité entre deux extrémités d'un produit profilé due à une longueur trop courte dudit produit profilé,
- [Fig.5] représente une vue schématique de côté d'une jonction de mauvaise qualité entre deux extrémités d'un produit profilé due à une longueur trop importante dudit produit profilé.

L'invention est relative à un procédé de dépose d'un produit profilé réalisé dans un mélange élastomère sur un support. Le produit profilé est par exemple réalisé dans un mélange élastomère destiné à être vulcanisé ultérieurement. Par exemple, ce mélange élastomère est un mélange non vulcanisé dont la composition comprend au moins un élastomère (caoutchouc naturel ou synthétique), une ou des charges renforçantes (noir de carbone, silice) et un ou des agents supplémentaires, par exemple destinés à provoquer et maîtriser la réaction de vulcanisation.

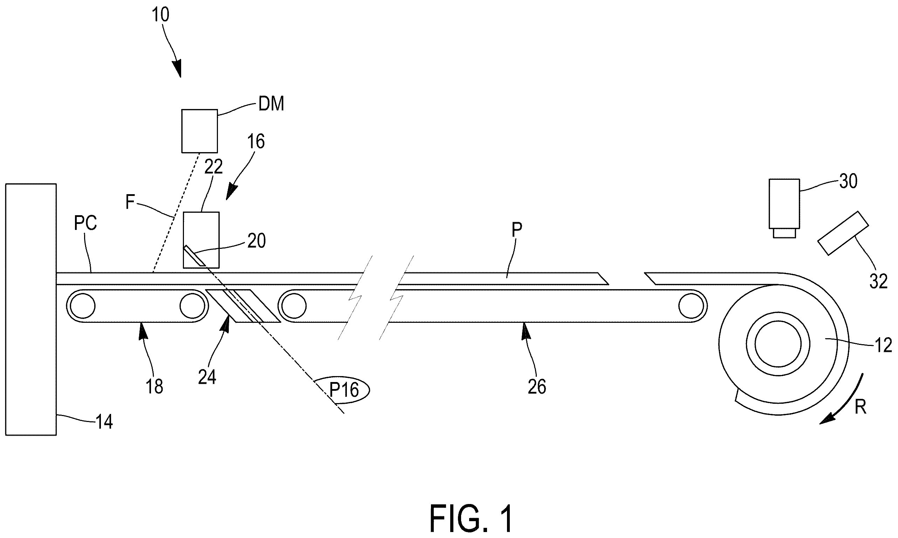

La figure 1 illustre une installation de dépose 10 d'un produit profilé P sur un support 12 tel une ébauche de pneumatique. Cette installation de dépose 10 permet par exemple de mettre en œuvre le procédé de dépose selon l'invention. Cette installation de dépose 10 comprend un poste d'alimentation 14 fournissant le profilé continu PC dans lequel est découpé le produit profilé P à déposer. Ce poste d'alimentation 14 peut être une extrudeuse ou une autre machine générant en continu le profilé continu PC à découper, ou un dispositif automatisé déroulant le profilé continu PC depuis un dispositif de stockage adapté. A la sortie du poste d'alimentation 14, l'installation de dépose comprend un poste de découpe 16 permettant de prélever une longueur prédéfinie dans le profilé continu PC qui constituera le produit profilé P à déposer sur le support 12. L'installation de dépose 10 comprend par exemple un premier dispositif de convoyage 18 permettant de réceptionner le profilé continu PC sortant du poste d'alimentation et de transporter le profilé continu PC jusqu'au poste de découpe. Le poste de découpe 16 comprend par exemple une lame 20 entraînée en translation par un actionneur 22 dans un plan de découpe P16 traversant le profilé continu PC. Par exemple, l'installation de dépose 10 comprend une enclume 24 permettant de soutenir le profilé continu PC pendant la découpe. Cette enclume 24 comprend un évidement central permettant de recevoir la lame 20 en fin de translation. L'installation de dépose 10 comprend par exemple un deuxième dispositif de convoyage 26 permettant de transporter le produit profilé P du poste de découpe 16 jusqu'au support 12 sur lequel le produit profilé P doit être déposé.

Dans la présente invention, le support 12 est de préférence cylindrique. Par exemple, et comme illustré en figure 1, le produit profilé P constitue la bande de roulement d'un futur pneumatique et le support 12 est une ébauche de pneumatique en cours de confection. Alternativement, le produit profilé P peut être un autre composant d'une ébauche de pneumatique tel une nappe, par exemple renforcée, et le support 12 peut être un tambour de confection d'un pneumatique. Lors de la dépose du produit profilé P, le support 12 est entrainé en rotation R, par exemple par un moteur électrique (non représenté).

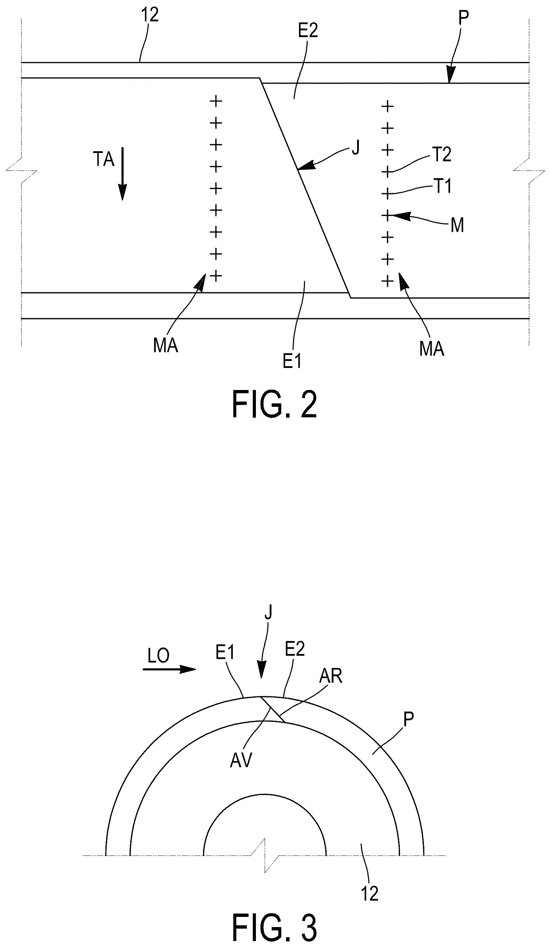

Lorsque le produit profilé P est déposé sur ledit support 12, et comme l'illustre la figure 2, les deux extrémités E1,E2 du produit profilé P se rejoignent l'une avec l'autre. Notamment dans le cadre de la confection d'ébauches de pneumatique et de la fabrication de pneumatiques, on cherche à ce que la jonction J des deux extrémités E1,E2 du produit profilé P soit de la meilleure qualité possible.

La figure 3 illustre une jonction J de bonne qualité des deux extrémités E1,E2 du produit profilé P dans la direction longitudinale LO du produit profilé P, le front arrière AR de la seconde extrémité E2 du produit profilé P venant parfaitement se plaquer contre le front avant AV de la première extrémité E1 du produit profilé P. Dans l'exemple illustré en figure 3, le front arrière AR et le front avant AV du produit profilé P sont découpés en biseau pour améliorer la soudure ultérieure de ces extrémités. La soudure de ces deux extrémités est par exemple réalisée par pression avec un outil adapté tel un rouleau et mise en œuvre de manière manuelle ou automatisée.

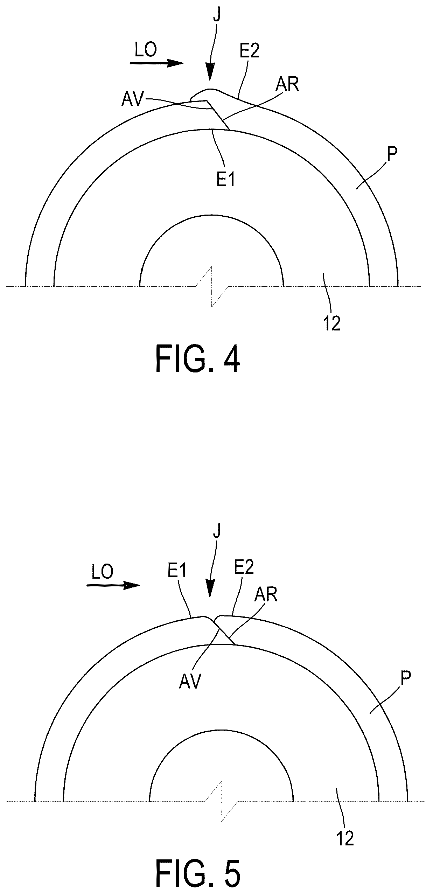

La figure 4 illustre une jonction J de moins bonne qualité des deux extrémités E1,E2 du produit profilé P dans la direction longitudinale LO du produit profilé P. La longueur du produit profilé P étant insuffisante, le front arrière AR de la seconde extrémité E2 du produit profilé P ne recouvre que partiellement le front avant AV de la première extrémité E1 du produit profilé P. Ce recouvrement partiel implique un manque de matière préjudiciable à l'uniformité du futur produit, tel un pneumatique, fabriqué avec le produit profilé P.

La figure 5 illustre un autre type de jonction J de moins bonne qualité des deux extrémités E1,E2 du produit profilé P dans la direction longitudinale LO du produit profilé P. Dans cet autre cas, la longueur du produit profilé P étant trop importante, le front arrière AR de la seconde extrémité E2 du produit profilé P recouvre le front avant AV de la première extrémité E1 du produit profilé P et se prolonge au-delà de ce front avant AV et par-dessus la première extrémité E1 du produit profilé P. Ce recouvrement excessif implique un surplus de matière préjudiciable à l'uniformité du futur produit, tel un pneumatique, fabriqué avec le produit profilé P.

La figure 2 illustre une jonction J de moins bonne qualité des deux extrémités E1,E2 du produit profilé P dans la direction transversale TA du produit profilé P. Dans ce cas, la première extrémité E1 du produit profilé P n'est pas alignée avec la seconde extrémité E2 du produit profilé P. Ce décrochement transversal nuit à la qualité du futur produit, tel un pneumatique, fabriqué avec le produit profilé P.

Le procédé de dépose selon l'invention a pour objectif de détecter et de signaler une jonction J de mauvaise qualité entre les deux extrémités E1,E2 d'un produit profilé P déposé sur un support 12.

A cet effet, le procédé de dépose comprend une étape d'application de marques MA sur les deux extrémités E1,E2 du produit profilé P, et une étape d'acquisition d'au moins une image de la jonction J des deux extrémités E1,E2 du produit profilé P et des marques MA apposées sur ces deux extrémités. L'étape de marquage est réalisée avant la dépose du produit profilé P sur le support 12, et l'étape d'acquisition est réalisée après la dépose du produit profilé P sur le support 12. Les marques MA sont apposées sur la surface supérieure d'un produit profilé P.

Selon l'invention, le procédé de dépose prévoit que les marques MA apposées sur les extrémités E1,E2 du produit profilé P sont apposées par ablation ou modification de matière avec un faisceau laser F, notamment par fusion et/ou combustion. Plus en détail, l'interaction du faisceau laser F avec la surface supérieure du produit profilé P provoque une modification de couleur ou de structuration, une gravure ou un enlèvement de matière dans la surface supérieure du produit profilé P.

En vue de mettre en œuvre ce marquage, l'installation de dépose 10 comprend par exemple un dispositif de marquage DM par faisceau laser F situé à proximité du poste de découpe 16 ou au-dessus de ce poste de découpe 16. Ainsi, le marquage et la découpe de deux extrémités de produits profilés P consécutifs peuvent être réalisés simultanément. Alternativement, le marquage de deux extrémités de produits profilés P consécutifs peut être effectué juste avant la découpe de ces deux extrémités. Comme illustré par la figure 1, le dispositif de marquage DM par faisceau laser F est par exemple monté au-dessus de la lame 20 du poste de découpe. Avantageusement, le dispositif de marquage DM par faisceau laser F comprend une source d'émission du faisceau laser F et des moyens d'orientation et de focalisation du faisceau laser F dans un volume de marquage, par exemple de forme conique, qui s'étend sous le dispositif de marquage DM. Par exemple, la source d'émission du faisceau laser F est hydride et combine les technologies fibrée et pulsée.

Pour l'étape d'acquisition d'au moins une image de la jonction J des deux extrémités du produit profilé P et des marques MA apposées sur ces deux extrémités, l'installation de dépose 10 comprend au moins un dispositif d'acquisition 30 tel une caméra ou un profilomètre 2D et/ou 3D. Eventuellement, l'installation de dépose 10 peut comprendre un dispositif d'éclairage 32 en complément du dispositif d'acquisition 30. L'étape d'acquisition étant réalisée après la dépose du produit profilé P sur le support 12, le dispositif d'acquisition 30 et le dispositif de d'éclairage 32, si celui-ci est présent, sont montés au-dessus du support 12.

Comme le montrent les figures 2 et 6, les marques MA apposées sur les deux extrémités E1,E2 d'un produit profilé sont constituées d'au moins un motif M qui comprend au moins un trait T1 s'étendant dans la direction longitudinale LO du produit profilé P et au moins un trait T2 s'étendant dans la direction transversale TA du produit profilé P. Par exemple, un motif M prend la forme d'une croix ou d'un L. En s'étendant dans ces deux directions, un motif M permet à la fois de mesurer un éventuel recouvrement partiel ou excessif dans la direction longitudinale LO des deux extrémités E1,E2 du produit profilé P au niveau d'une jonction J, et de mesurer un éventuel décrochement transversal dans la direction transversale des deux extrémités E1,E2 du produit profilé P au niveau d'une jonction J.

Pour améliorer la qualité des mesures effectuées avec les marques MA, une marque MA apposée sur une extrémité E1,E2 d'un produit profilé est constituée par une pluralité de motifs M comprenant au moins un trait T1 s'étendant dans la direction longitudinale LO du produit profilé et au moins un trait T2 s'étendant dans la direction transversale TA du produit profilé. De préférence, et comme illustré en figure 2, ces différents motifs M sont alignés les uns avec les autres dans la direction transversale TA du produit profilé.

Comme indiqué précédemment, du fait du positionnement des dispositifs de marquage DM par rapport au poste de découpe 16, le marquage et la découpe de deux extrémités de produits profilés P consécutifs peuvent être réalisés simultanément. Le procédé de dépose selon l'invention prévoit de préférence que l'apposition d'une marque MA sur l'extrémité arrière E2 d'un premier produit profilé P est réalisée lorsque cette extrémité arrière E2 est découpée et séparée de l'extrémité avant E1 d'un second produit profilé P.

Avantageusement, le procédé de dépose selon l'invention prévoit de générer des alertes lorsqu'une jonction J de mauvaise qualité est détectée. Par exemple, des alertes sont générées lorsque les marques MA apposées sur les deux extrémités avant E1 et arrière E2 d'un produit profilé P déposé sur le support 12 ne se situent pas à la distance souhaitée l'une de l'autre dans la direction longitudinale LO du produit profilé ou ne sont pas alignées dans la direction transversale TA du produit profilé P. Bien entendu, tant dans la direction longitudinale LO que dans la direction transversale TA, des écarts minimes avec la valeur de référence peuvent être tolérés. Selon les écarts constatés avec la valeur de référence, les alertes peuvent être seulement enregistrées avec un lien avec le produit fabriqué, signalées visuellement ou sonorement, ou utilisées pour arrêter le fonctionnement de l'installation de dépose afin de permettre à un opérateur de remédier au problème soit en réajustant le produit profilé P ou en le mettant au rebut.

## Revendications

1. Procédé de dépose d'un produit profilé (P) sur un support (12), le produit profilé étant réalisé dans un mélange élastomère et découpé à une longueur prédéfinie avant d'être déposé sur ledit support, les deux extrémités (E1,E2) du produit profilé se rejoignant l'une avec l'autre lorsque le produit profilé est déposé sur ledit support, le procédé de dépose comprenant une étape d'application de marques (MA) sur les deux extrémités du produit profilé, cette étape de marquage étant réalisée avant la dépose du produit profilé sur le support, et le procédé de dépose comprenant une étape d'acquisition d'au moins une image de la jonction (J) des deux extrémités du produit profilé et des marques (MA) apposées sur ces deux extrémités, cette étape d'acquisition étant réalisée après la dépose du produit profilé sur le support, le procédé de dépose étant **caractérisé en ce que** les marques (MA) apposées sur les extrémités du produit profilé sont apposées par ablation ou modification de matière avec un faisceau laser (F), l'interaction du faisceau laser (F) avec la surface supérieure du produit profilé (P) provoquant une modification de couleur ou de structuration, une gravure ou un enlèvement de matière dans la surface supérieure du produit profilé (P).

2. Procédé de dépose selon la revendication 1, dans lequel les marques (MA) apposées sur les deux extrémités d'un produit profilé sont constituées d'au moins un motif (M) qui comprend au moins un trait (T1) s'étendant dans la direction longitudinale (LO) du produit profilé et au moins un trait (T2) s'étendant dans la direction transversale (TA) du produit profilé.

3. Procédé de dépose selon la revendication 2, dans lequel une marque (MA) apposée sur une extrémité d'un produit profilé est constituée par une pluralité de motifs (M) comprenant au moins un trait (T1) s'étendant dans la direction longitudinale (LO) du produit profilé et au moins un trait (T2) s'étendant dans la direction transversale (TA) du produit profilé, ces différents motifs (M) étant alignés les uns avec les autres dans la direction transversale (TA) du produit profilé.

4. Procédé de dépose selon l'une des revendications précédentes, dans lequel l'apposition d'une marque (MA) sur l'extrémité arrière (E2) d'un premier produit profilé est réalisée lorsque cette extrémité arrière est découpée et séparée de l'extrémité avant (E1) d'un second produit profilé.

5. Procédé de dépose selon l'une des revendications précédentes, dans lequel une alerte est générée lorsque les marques (MA) apposées sur les deux extrémités avant (E1) et arrière (E2) d'un produit profilé (P) déposé sur le support (12) ne se situent pas à la distance souhaitée l'une de l'autre dans la direction longitudinale (LO) du produit profilé ou ne sont pas alignées dans la direction transversale (TA) du produit profilé (P).

6. Procédé de dépose selon l'une des revendications précédentes, dans lequel le support (12) est cylindrique et prend par exemple la forme d'un tambour de confection d'un pneumatique ou d'une ébauche de pneumatique en cours de confection.

7. Procédé de dépose selon l'une des revendications précédentes, dans lequel le produit profilé (P) constitue la bande de roulement d'un futur pneumatique ou un autre composant d'une ébauche de pneumatique tel une nappe, par exemple renforcée.

8. Installation de dépose (10) d'un produit profilé (P) sur un support (12), l'installation de dépose comprenant un poste d'alimentation (14) fournissant le profilé continu (PC) dans lequel est découpé le produit profilé (P) à déposer, l'installation de dépose comprenant un poste de découpe (16) permettant de prélever une longueur prédéfinie dans le profilé continu (PC) qui constituera le produit profilé (P) à déposer sur le support (12), l'installation de dépose comprenant un premier dispositif de convoyage (18) permettant de réceptionner le profilé continu (PC) sortant du poste d'alimentation et de transporter le profilé continu (PC) jusqu'au poste de découpe et un deuxième dispositif de convoyage (26) permettant de transporter le produit profilé (P) du poste de découpe (16) jusqu'au support (12) sur lequel le produit profilé (P) doit être déposé, l'installation de dépose étant **caractérisée en ce qu'**elle comprend un dispositif de marquage (DM) par faisceau laser (F) situé à proximité du poste de découpe (16) ou au-dessus de ce poste de découpe (16).

9. Installation de dépose (10) selon la revendication 8, dans laquelle le dispositif de marquage (DM) par faisceau laser (F) est monté au-dessus de la lame (20) du poste de découpe (16).
